Europäisches Patentamt

European Patent Office

Office européen des brevets

(19)

(11) **EP 1 148 101 A1**

(12) **EUROPEAN PATENT APPLICATION**

(43) Date of publication:
**24.10.2001 Bulletin 2001/43**

(51) Int Cl.⁷: $C09C\ 1/30$

(21) Application number: **01303628.0**

(22) Date of filing: **20.04.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.04.2000 JP 2000120864**

(71) Applicant: **SHIN-ETSU CHEMICAL CO., LTD.**
**Chiyoda-ku Tokyo (JP)**

(72) Inventors:
 • **Nozawa, Yasuaki, c/o Gunma Complex**
  **Annaka-shi, Gunma-ken (JP)**

 • **Shirasuna, Kiyoshi, c/o Gunma Complex**
  **Annaka-shi, Gunma-ken (JP)**
 • **Akiyama, Masanori, c/o Gunma Complex**
  **Annaka-shi, Gunma-ken (JP)**
 • **Uehara, Hidekazu, c/o Gunma Complex**
  **Annaka-shi, Gunma-ken (JP)**
 • **Ueno, Susumu, c/o Gunma Complex**
  **Annaka-shi, Gunma-ken (JP)**

(74) Representative: **Stoner, Gerard Patrick et al**
 **MEWBURN ELLIS**
 **York House**
 **23 Kingsway**
 **London WC2B 6HP (GB)**

(54) **Production of hydrophobic silica fine powder**

(57)   Hydrophobic silica fine powder is prepared by pyrolyzing a silane compound to give silica fine powder, then treating the silica fine powder with a hydrophobizing agent in a fluidization vessel containing at most 3 vol% of oxygen. The process effectively confers the pyrogenic silica with hydrophobicity.

## FIG.1

EP 1 148 101 A1

## Description

BACKGROUND OF THE INVENTION

Field of the Invention

The present invention relates to a process for producing a hydrophobic silica fine powder by treating a pyrogenic silica fine powder having silanol groups on the surface with a hydrophobizing agent such as an organohalosilane.

Prior Art

The production of hydrophobic silica by pyrolyzing a silane compound to obtain silica (silicon dioxide), then treating the silica with an organohalosilane is well known. For example, German Pat. No. 63784 discloses a process in which pyrogenic silica having silanol groups on the surface is hydrophobized with dimethyldichlorosilane in a parallel-flow fluidization vessel at 400 to 600°C, the process being carried out in nitrogen and in the presence of steam.

However, prior-art processes for hydrophobizing pyrogenic silica require a relatively large amount of the treatment agent.

SUMMARY OF THE INVENTION

It is therefore an object of the present invention to provide a process for producing hydrophobic silica fine powder by the efficient hydrophobization of pyrogenic silica fine powder.

When a silica fine powder prepared by the pyrolysis of a silane compound is rendered hydrophobic with a hydrophobizing agent such as an organohalosilane in a fluidization vessel, treatment is carried out by introducing into the fluidization vessel a gas containing the silica fine powder. The inventor has found that if the oxygen concentration of the silica-laden gas is lowered prior to feeding the gas to the fluidization vessel, such that the fluidization vessel contains not more than 3 vol% of oxygen, then hydrophobizing treatment in the fluidization vessel is improved in efficiency and the amount of hydrophobizing agent used can be reduced.

That is, when silica is produced by the thermal hydrolysis of a silane compound, hydrogen and air are generally used for combustion. The use of a more than stoichiometric amount of air results in the presence of a relatively large concentration (typically 8 to 15 vol%) of oxygen in the silica-laden gas following combustion. The conventional practice has been to carry out hydrophobizing treatment by feeding silica-laden gas having this high oxygen concentration to the fluidization vessel. By contrast, the present invention is based on the discovery that if, instead of feeding a silica-laden gas having such a high oxygen concentration to the fluidization vessel, the oxygen within the silica-laden gas is lowered or largely eliminated prior to feeding the gas to the vessel, hydrophobization can be efficiently and uniformly carried out using a relatively small amount of hydrophobizing agent. The inventor has also found that this eliminates certain risks posed by the presence of a high level of oxygen, such as the formation of an explosive mixture due to the mixture of oxygen and the hydrophobizing agent within the fluidization vessel or combustion of the hydrophobizing agent by oxygen. The above-referenced German Pat. No. 63784 makes no mention of lowering the level of oxygen prior to feeding the silica-laden gas to the fluidization vessel. JP-B 61-50882 does state that the danger of combustion with residual oxygen can be circumvented and equipment repair costs reduced by directly connecting a nitrogen line to the silica-laden gas, but the overall amount of oxygen carried to the fluidization vessel together with the silica-laden gas is unchanged.

Accordingly, the present invention provides a process for producing hydrophobic silica fine powder, which process is comprised of pyrolyzing a silane compound to give a silica fine powder, then treating the silica fine powder with a hydrophobizing agent in a fluidization vessel containing at most 3 vol% of oxygen. In a preferred embodiment of the process, a gas containing the silica fine powder prepared by pyrolyzing a silane compound is fed to a purging vessel where oxygen within the silica-laden gas is substituted with an inert gas so as to lower the oxygen concentration of the silica-laden gas to at most 7 vol%; following which the oxygen-depleted, silica-laden gas is introduced into the fluidization vessel.

The invention is thus directed at a process wherein a silica prepared by the thermal hydrolysis of silane is rendered hydrophobic in a fluidization vessel with a hydrophobizing agent, which process involves lowering the oxygen concentration within the fluidization vessel. The oxygen present in the silica-laden gas is effectively purged with an inert gas such as nitrogen before the silica-laden gas is fed to the fluidization vessel. The level of chlorides and other halides which are present in the gas and cause equipment corrosion at elevated temperatures can also be reduced at this time. Hence, silica hydrophobization can be successfully carried out efficiently and uniformly using a small amount of treatment agent. The silica-laden gas containing less oxygen is fed to the fluidization vessel, minimizing variations in the properties of the hydrophobized silica due to combustion of the treatment agent and oxygen. Moreover, the level of chlorides which causes corrosion of the equipment at high temperatures is low, thereby extending the life of the equipment and preventing the undesirable admixture of metallic impurities due to corrosion.

BRIEF DESCRIPTION OF THE DRAWINGS

The objects, features and advantages of the invention will become more apparent from the following detailed description, taken in conjunction with the accompanying drawings.

FIG. 1 is a schematic showing an exemplary system for the hydrophobization of pyrogenic silica according to the present invention.

FIG. 2 is a more detailed view of the purging vessel in the system shown in FIG. 1.

FIG. 3 is a perspective view of a perforated plate.

DETAILED DESCRIPTION OF THE INVENTION

The inventive process for producing hydrophobic silica involves preparing a silica fine powder by pyrolyzing a silane compound, then treating the resulting pyrogenic silica fine powder in a fluidization vessel with a hydrophobizing agent.

The pyrogenic silica fine powder may be prepared by a known process. A powder having a BET specific surface area of 50 to 400 $m^2/g$ is desirable in terms of flowability and other characteristics.

The hydrophobizing agent used to treat the pyrogenic silica fine powder may be any surface treating agent employed in the related art to render silica hydrophobic, although an organohalosilane such as methyldichlorosilane is preferred.

Treatment of the pyrogenic silane within the fluidization vessel may be carried out by a known process using the foregoing hydrophobizing agent, steam and an inert gas. The fluidization vessel is fluidized with an inert gas, generally nitrogen. The hydrophobizing agent and steam can be entrained by the inert gas. Alternatively, they may be mixed with the silica to be treated before it enters the fluidization vessel, or the steam may be mixed into the fluidizing inert gas and the silane subsequently mixed into the resulting gas stream.

The hydrophobizing agent is used in an amount of preferably 0.06 to 0.1 g per 100 $m^2$ of pyrogenic silica surface area. The amount of steam used in hydrophobization is preferably 0.1 to 5 wt%, and especially 0.5 to 3 wt%, based on the silica.

The silica hydrophobization temperature is preferably from about 400 to 600°C, and especially from about 470 to 550°C. The silica residence time within the reaction zone is preferably from about 5 to 60 minutes, and especially from about 7 to 30 minutes. Too short a residence time results in inadequate treatment. A long residence time increases the degree of treatment, but too long a residence time is economically undesirable.

According to the invention, silane hydrophobization is carried out within the fluidization vessel at an oxygen concentration of at most 3 vol%, and preferably at most 2 vol%. Most of the oxygen within the fluidization vessel is entrained together with the pyrogenic silica. To minimize the entry of oxygen, steps must be taken to keep oxygen out of the other gas streams fed to the fluidization vessel and to remove oxygen from the pyrogenic silica-laden gas before it enters the fluidization vessel. A preferred technique for removing oxygen from the pyrogenic silica-laden gas is to purge the oxygen with an inert gas such as nitrogen. This can be effectively carried out by introducing the pyrogenic silica-laden gas into a purging vessel, purging the oxygen present in the gas with an inert gas such as nitrogen for removing the oxygen, and sending the resulting oxygen-lowered gas to the fluidization vessel. The silica-laden gas from which the oxygen has been thus purged with an inert gas such as nitrogen, thereby lowering or largely eliminating the oxygen, has an oxygen concentration of preferably at most 7 vol%, and especially at most 4 vol%, before it is introduced into the fluidization vessel.

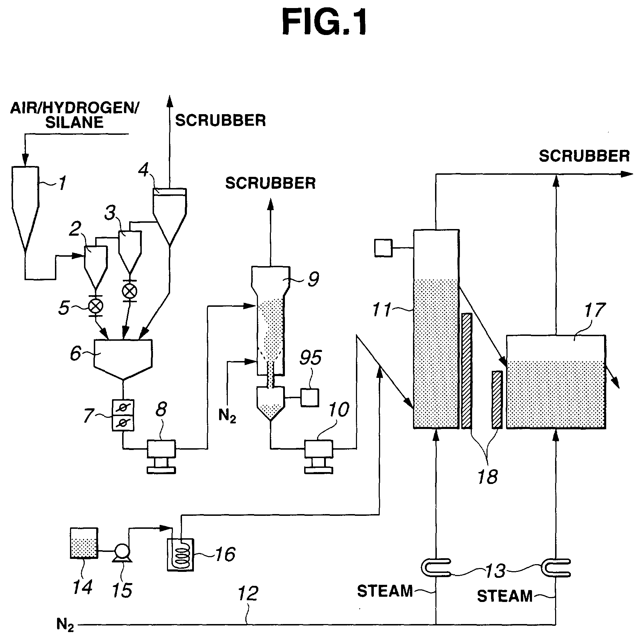

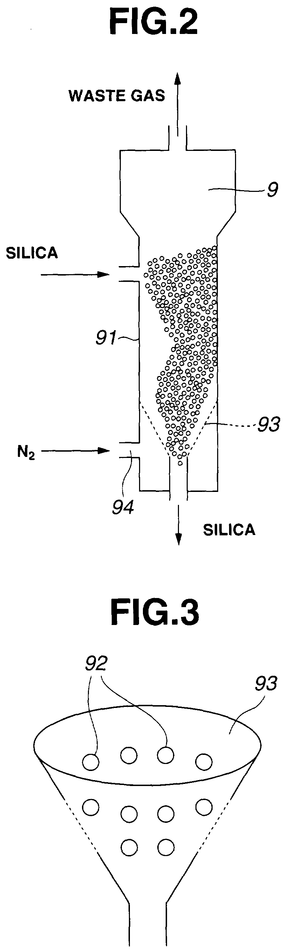

The hydrophobizing treatment of silica can be carried out as a continuous process within a system that includes a pyrogenic silica-producing operation. Referring to FIG. 1 which depicts such a system, the starting silane (a halosilane compound), air and hydrogen are fed to a combustion chamber 1 for silica production, where the silane is pyrolyzed to produce silica. The halogen-containing gas accompanying the pyrogenic silica produced from the halosilane compound is separated from the silica using cyclones 2 and 3 and a bag filter 4. The silica from which the halogen-containing gas has been separated passes through a hopper 6 and a double damper 7, and is delivered by a diaphragm pump 8 to a purging vessel 9. In the diagram, rotary valves 5 are positioned between the cyclones 2 and 3 and the hopper 6. Inside the purging vessel 9, the oxygen and the halide gases within the silica-laden gas are purged with nitrogen. Referring to FIG. 2, which shows the essential features of the purging vessel 9, the vessel 9 has a cylindrical housing 91. Positioned near the bottom of the housing 91 is a funnel-shaped plate 93 perforated with a plurality of throughholes 92 as shown in FIG. 3. A nitrogen inlet 94 is provided on the sidewall of the housing 91 at a position below the contact point of the perforated plate 93 with the housing. Nitrogen is introduced into the vessel 9 through the nitrogen inlet 94 and flows upward through the throughholes 92 in the plate 93. By introducing at the same time the silica-laden gas from an upper position of the sidewall on the cylindrical housing 91, the oxygen and halide gases present in the silica-laden gas are entrained by the nitrogen gas and removed outside of the system from the top of the cylindrical housing 91. The silica-laden gas from which oxygen and halide gases have been removed in this way is discharged from the bottom of the purging vessel 9 and sent to a fluidization vessel 11 by a diaphragm pump 10.

The oxygen concentration of the silica-laden gas before it enters the purging vessel 9 is generally from 8 to 15 vol%, and the oxygen concentration of the silica-laden gas following discharge from the purging vessel 9 is preferably from 0.3 to 7 vol%, and especially from 0.3 to 4 vol%. It is advantageous to measure the oxygen concentration with an oxygen meter 95 at suitable intervals, and preferably continuously, and to control in accordance therewith the flow rate of nitrogen into the purging vessel 9 as well as the velocity at which the nitrogen emerges from the throughholes 92 in the perforated plate 93. The throughholes 92 in the porous plate 93 have a diameter of preferably 1 to 4 mm, and especially 1 to 2 mm. The number of such holes may be selected according to such factors as the nitrogen flow rate and the combined flow rates of all the gases into and out of the purging vessel 9. Typically, the number of holes is selected such as to set the velocity at which the nitrogen gas emerges from the throughholes at 10 to 40 m/s, and especially 20 to 30 m/s.

The silica that is introduced into the fluidization vessel 11 after the oxygen has been reduced or largely removed in the above manner is then subjected to hydrophobization using a hydrophobizing agent such as an organohalosilane. A fluidized state is created inside the fluidization vessel 11 by fluidization with an inert gas, preferably nitrogen, and the silica is treated with the hydrophobizing agent. The nitrogen introduced into the fluidization vessel 11 for the purpose of fluidization further lowers the oxygen concentration within the vessel 11. As shown in FIG. 1, the nitrogen passes along a feed line 12 and through a heater 13, where it is heated before entering the fluidization vessel 11. In addition, steam may be entrained by the heated nitrogen gas and fed to the fluidization vessel 11. The hydrophobizing agent 14 is passed by a pump 15 through an evaporator 16 and delivered to the fluidization vessel 11. The hydrophobizing agent 14 may be mixed with the silica before the silica enters the fluidization vessel 11, as shown in FIG. 1. Alternatively, steam may be mixed into the fluidizing nitrogen, and the hydrophobizing agent subsequently added to the resulting gas stream.

After the silica has been treated as described above, it is deoxygenated in a deoxygenation vessel 17. It is noted that a heater 18 is provided to heat the vessels as desired. Waste gases from the fluidization vessel 11 and the deoxygenation vessel 17 are discharged to the exterior after passing through a scrubber.

By using the foregoing process to hydrophobize in a fluidization vessel silica that has been produced by thermal hydrolysis, the level of oxygen within the silica-laden gas introduced into the fluidization vessel can be effectively reduced, enabling the surface of the silica to be efficiently treated by the hydrophobizing agent. As a result, the silica is effectively treated even when the amount of hydrophobizing agent is small, and variations in the silica properties are minimized. Moreover, there is little risk of combustion between the hydrophobizing agent and the oxygen. Also, the level of halogens such as chlorine in the silica-laden gas is lower, reducing the amount of corrosion in the equipment operated at elevated temperatures. This prolongs the life of the equipment and prevents the unwanted admixture of metallic impurities from corrosion.

Although the degree of hydrophobization and other properties required of the hydrophobized silica produced by the inventive process will vary according to the intended use, for sealant applications a specific surface area of about 110 m$^2$/g, a carbon content of about 0.9 wt % or more, a degree of hydrophobization of at least 40, and a pH of at least 4.5 are preferred.

Hydrophobic silicas produced by the inventive process lend themselves well to such uses as thickeners in paints and coatings, adhesives and synthetic resins, as reinforcements in plastics, and as flow enhancers in copier toners.

EXAMPLES

The following examples are provided to illustrate the invention, and are not intended to limit the scope thereof. The degree of hydrophobization was measured as follows. Degree of Hydrophobization

Treated powder, 0.2 g, was added to 50 ml of pure water in a 200 ml beaker. While stirring the water with a magnetic stirrer, methanol was added from a burette whose tip was immersed in the water. The degree of hydrophobization was determined from the formula:

$$\text{Degree of hydrophobization} = 100A/(50+A)$$

wherein A is the amount (ml) of methanol that had been added when the treated powder floating on the surface of water became wet and dispersed completely in the water.

Example 1

Treatment was carried out as described below using the apparatus shown in FIGS. 1 and 2. The throughholes in the perforated plate of the purging vessel had a diameter of 1 mm, and the nitrogen gas emerged from the plate at a velocity of 22 m/s.

Methyltrichlorosilane (50.3 kg/hr) was burned with hydrogen and air, forming 20.1 kg/hr of silica. The silica-laden gas was passed through the purging vessel to the fluidization vessel. Nitrogen was supplied to the purging vessel at a rate of 10 Nm$^3$/hr. Prior to entering the purging vessel, the silica-laden gas had an oxygen concentration of 13 to 15 vol% and a chlorine concentration of 0.06 to 0.08 vol% (Cl$_2$ basis). The silica-laden gas leaving the purging vessel had an oxygen concentration of 0.3 to 0.6 vol% and a chlorine concentration of 0.002 to 0.004 vol% (Cl$_2$ basis). Nitrogen was supplied to the fluidization vessel at a rate of 10 Nm$^3$/hr. The oxygen concentration within the fluidization vessel was 0.1 to 0.2 vol%. Treatment within the fluidization vessel was carried out at a temperature of 480°C while feeding dimethyldichlorosilane at a feed rate of 2.0 kg/hr and steam at a feed rate of 1 kg/hr. The silica residence time within the fluidization vessel was about 10 minutes. The untreated silica had a specific surface area of 127 m$^2$/g. Following treatment and deoxygenation, the silica had a specific surface area of 114 $m^2$/g, a carbon content of 0.97 wt%, a pH of 4.8 and a degree of hydrophobization of 48.

Example 2

Methyltrichlorosilane (49.8 kg/hr) was burned with hydrogen and air, forming 19.9 kg/hr of silica. The silica-laden gas was passed through the purging vessel to the fluidization vessel. Nitrogen was supplied to the purging vessel at a rate of 5 $Nm^3$/hr. The silica-laden gas leaving the purging vessel had an oxygen content of 3.5 to 3.8 vol%. The other conditions were the same as in Example 1. The oxygen concentration within the fluidization vessel was 1.7 to 1.9 vol%. The untreated silica had a specific surface area of 133 $m^2$/g. Following treatment and deoxygenation, the silica had a specific surface area of 122 $m^2$/g, a carbon content of 0.86 wt%, a pH of 4.7 and a degree of hydrophobization of 46.

Example 3

Methyltrichlorosilane (50.1 kg/hr) was burned with hydrogen and air, forming 20.0 kg/hr of silica. The silica-laden gas was passed through the purging vessel to the fluidization vessel. Nitrogen was supplied to the purging vessel at a rate of 3 $Nm^3$/hr. The silica-laden gas leaving the purging vessel had an oxygen content of 6.3 to 6.8 vol%. The other conditions were the same as in Example 1. The oxygen concentration within the fluidization vessel was 2.4 to 2.8 vol%. The untreated silica had a specific surface area of 132 $m^2$/g. Following treatment and deoxygenation, the silica had a specific surface area of 120 $m^2$/g, a carbon content of 0.63 wt%, a pH of 4.7 and a degree of hydrophobization of 34.

Comparative Example 1

Methyltrichlorosilane (50.1 kg/hr) was burned with hydrogen and air, forming 20.0 kg/hr of silica. The silica was passed through the purging vessel to the fluidization vessel. Nitrogen was not supplied to the purging vessel. The oxygen concentration within the fluidization vessel was 4.3 to 4.7 vol%. The other conditions were the same as in Example 1. The untreated silica had a specific surface area of 130 $m^2$/g. Following treatment and deoxygenation, the silica had a specific surface area of 124 $m^2$/g, a carbon content of 0.23 wt%, a pH of 4.7 and a degree of hydrophobization of 7.

As will have become apparent from the preceding examples, the inventive process is able to effectively hydrophobize pyrogenic silica fine powder.

Japanese Patent Application No. 2000-120864 is incorporated herein by reference.

Although some preferred embodiments have been described, many modifications and variations may be made thereto in light of the above teachings. It is therefore to be understood that the invention may be practiced otherwise than as specifically described without departing from the scope of the appended claims.

**Claims**

1. A process for producing hydrophobic silica fine powder, comprising the steps of pyrolyzing a silane compound to give a silica fine powder, and treating the silica fine powder with a hydrophobizing agent in a fluidization vessel containing at most 3 vol% of oxygen.

2. The process of claim 1, wherein the hydrophobizing agent is an organohalosilane.

3. The process of claim 1, further comprising the step of feeding a gas containing the silica fine powder resulting from the pyrolyzing step to a purging vessel for purging oxygen within the silica-laden gas with an inert gas so as to lower the oxygen concentration of the silica-laden gas to at most 7 vol%, before the silica-laden gas is fed to the fluidization vessel.

# FIG.1

AIR/HYDROGEN/
SILANE

SCRUBBER

SCRUBBER

SCRUBBER

1

4

3

2

5

6

7

8

9

95

10

11

17

18

N₂

STEAM

STEAM

13

12

14

15

16

N₂

# FIG.2

WASTE GAS

SILICA

*9*

*91*

*93*

N₂

*94*

SILICA

# FIG.3

*92*

*93*

**European Patent Office**

**EUROPEAN SEARCH REPORT**

Application Number

EP 01 30 3628

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 3 924 029 A (SCHUTTE DIETER ET AL) 2 December 1975 (1975-12-02) * claims 1,2,4,5 * * column 1, line 13 - line 18 * * column 2, line 39 - line 65 * * column 4, line 53 - line 65 * | 1,2 | C09C1/30 |
| A | | 3 | |
| D,X | DE 11 63 784 B (DEUTSCHE GOLD- UND SILBER-SCHEIDEANSTALT VORMALS ROESSLER) 27 February 1964 (1964-02-27) * claim 1 * | 1,2 | |
| A | * column 5, line 66 - column 6, line 8 * | 3 | |
| A | DE 42 40 741 A (WACKER CHEMIE GMBH) 9 June 1994 (1994-06-09) * the whole document * | 1,2 | |
| A | EP 0 090 125 A (DEGUSSA) 5 October 1983 (1983-10-05) * page 5, paragraph 2 * | 1,2 | TECHNICAL FIELDS SEARCHED (Int.Cl.7) |
| D | & JP 61 050882 B 6 November 1986 (1986-11-06) | | C09C |
| A | EP 0 378 785 A (WACKER CHEMIE GMBH) 25 July 1990 (1990-07-25) * claim 1 * * page 3, line 7 - line 9 * * page 3, line 40 - page 4, line 9 * | 1,2 | |
| A | FR 2 305 390 A (DEGUSSA) 22 October 1976 (1976-10-22) * claims 1,3 * * page 4, line 12 - line 33 * | 1 | |

-/--

The present search report has been drawn up for all claims

| Place of search | Date of completion of the search | Examiner |
|---|---|---|
| THE HAGUE | 3 July 2001 | Rigondaud, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 01 30 3628

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DE 25 46 718 A (INST FISITSCHESKOJ CHIMII IM L) 28 April 1977 (1977-04-28) * the whole document * | 1 | |
| | | | **TECHNICAL FIELDS SEARCHED** (Int.Cl.7) |

The present search report has been drawn up for all claims

| Place of search | Date of completion of the search | Examiner |
|---|---|---|
| THE HAGUE | 3 July 2001 | Rigondaud, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**    EP 01 30 3628

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2001

| Patent document cited in search report | | Publication date | Patent family member(s) | | | Publication date |
|---|---|---|---|---|---|---|
| US 3924029 | A | 02-12-1975 | CH | 450368 | A | 31-01-1968 |
| | | | DK | 124993 | B | 18-12-1972 |
| | | | GB | 1031764 | A | 02-06-1966 |
| | | | SE | 302293 | B | 15-07-1968 |
| DE 1163784 | B | | NONE | | | |
| DE 4240741 | A | 09-06-1994 | CN | 1087601 | A,B | 08-06-1994 |
| | | | DE | 59300350 | D | 17-08-1995 |
| | | | EP | 0601482 | A | 15-06-1994 |
| | | | JP | 6206720 | A | 26-07-1994 |
| | | | JP | 8025738 | B | 13-03-1996 |
| | | | US | 5372795 | A | 13-12-1994 |
| EP 0090125 | A | 05-10-1983 | DE | 3211431 | A | 29-09-1983 |
| | | | CA | 1203667 | A | 29-04-1986 |
| | | | DE | 3360084 | D | 09-05-1985 |
| | | | JP | 1383602 | C | 09-06-1987 |
| | | | JP | 58181715 | A | 24-10-1983 |
| | | | JP | 61050882 | B | 06-11-1986 |
| | | | US | 4503092 | A | 05-03-1985 |
| EP 0378785 | A | 25-07-1990 | DE | 3839900 | A | 31-05-1990 |
| | | | AT | 87958 | T | 15-04-1993 |
| | | | AU | 615122 | B | 19-09-1991 |
| | | | AU | 4548389 | A | 31-05-1990 |
| | | | BR | 8905953 | A | 19-06-1990 |
| | | | CA | 2003838 | A,C | 25-05-1990 |
| | | | DE | 58904021 | D | 13-05-1993 |
| | | | ES | 2039816 | T | 01-10-1993 |
| | | | JP | 2036032 | C | 28-03-1996 |
| | | | JP | 2189370 | A | 25-07-1990 |
| | | | JP | 7068464 | B | 26-07-1995 |
| | | | US | 5057151 | A | 15-10-1991 |
| FR 2305390 | A | 22-10-1976 | DE | 2513608 | A | 07-10-1976 |
| | | | BE | 840130 | A | 27-09-1976 |
| | | | GB | 1547421 | A | 20-06-1979 |
| | | | JP | 1168380 | C | 30-09-1983 |
| | | | JP | 51120996 | A | 22-10-1976 |
| | | | JP | 57030803 | B | 01-07-1982 |
| | | | US | 4015031 | A | 29-03-1977 |
| DE 2546718 | A | 28-04-1977 | NONE | | | |

EPO FORM P0459

For more details about this annex : see Official Journal of the European Patent Office, No. 12/82